# EUROPEAN PATENT APPLICATION

(11) **EP 2 618 242 A1**
(43) Date of publication of application: **24.07.2013**
(21) Application number: 13000031.8
(22) Date of filing: 04.01.2013
(51) Int. Cl.: G06F 3/044

(54) **Touch panel**

(30) Priority: 05.01.2012 US 201261583571 P; 28.09.2012 US 201213629610
(71) Applicant: HTC Corporation, Taoyuan County 330 (TW)
(72) Inventor: Lo, Pi-Lin, 330 Taoyuan City, Taoyuan County (TW); Chen, Te-Mu, 330 Taoyuan City, Taoyuan County (TW); Hsueh, Yi-Fan, 330 Taoyuan City, Taoyuan County (TW); Lin, Yen-Cheng, 330 Taoyuan City, Taoyuan County (TW)
(74) Representative: Emde, Eric

(57) **Abstract**

A touch panel is provided. The touch panel includes a substrate, a plurality of first electrode lines, a plurality of second electrode lines and a plurality of connecting lines. The first electrode lines are disposed parallel to one another on the substrate and are respectively extended along a first direction from a first side of the substrate to a second side of the substrate opposite to the first side. The second electrode lines are disposed parallel to one another on the substrate and are respectively extended along a second direction. The first direction and the second direction are intersected with each other. The connecting lines are respectively connected to the second electrode lines. A part of the connecting lines are extended to the first side and another part of the connecting lines are extended to the second side.

## Description

### CROSS-REFERENCE TO RELATED APPLICATION

This application claims the priority benefit of U.S. provisional application serial no. 61/583,571, filed on January 5, 2012. The entirety of the above-mentioned patent application is hereby incorporated by reference herein and made a part of this specification.

### BACKGROUND OF THE INVENTION

### FIELD OF THE INVENTION

The present application relates to a touch panel, and more particularly, to a capacitive touch panel.

### Description of Related Art

As information technology, wireless mobile communication and information appliances have been rapidly developed and applied, to achieve more convenience, more compact and light volume and more user-friendly designs, various information products have changed from using conventional input devices such as key boards or mice to using touch panels.

Touch panels can be categorized into resistive touch panels, capacitive touch panels, optical touch panels, sound wave touch panels, and electromagnetic touch panels, etc, based on differences in the sensing principles. The capacitive touch panels are now widely used in all kinds of handheld electronic devices as they are characterized by fast response time, high reliability and high definition, and so on. The sensing array of the capacitive touch panels are formed by a plurality of electrode lines interlaced with each other to achieve surface sensing. When a user touches a touch panel with a finger, the touch panel determines a touch position of the finger according to the variation in capacitance of the sensing array.

It is known that the peripheral circuit of the touch panel or the connecting lines of the electrode lines of the touch panel occupy the space of the substrate. When the sensing resolution is increased, the complex peripheral circuit or the connecting lines of the electrode lines occupies larger border or limits the layout of the electrode lines, and easily causes unexpected electrical interference, which is disadvantageous towards the structural and electronic designs of the touch panel.

### SUMMARY OF THE INVENTION

The present application provides a touch panel, which uses the wiring space on the substrate effectively so as to increase the tolerance in the structural and electronic design.

A touch panel is provided. The touch panel includes a substrate, a plurality of first electrode lines, a plurality of second electrode lines and a plurality of connecting lines. The first electrode lines are disposed parallel to one another on the substrate and are respectively extended along a first direction from a first side of the substrate to a second side of the substrate opposite to the first side. The second electrode lines are disposed parallel to one another on the substrate and are respectively extended along a second direction. The first direction and the second direction are intersected with each other. The connecting lines are located at the periphery of the substrate and respectively connected to the second electrode lines. A first part of the connecting lines are extended to the first side and a second part of the connecting lines are extended to the second side.

A touch panel is provided. The touch panel includes a substrate, a plurality of first electrode lines, a plurality of electrode pads and a plurality of connecting lines. The first electrode lines are disposed parallel to one another on the substrate and are respectively extended along a first direction from a first side of the substrate to a second side of the substrate opposite to the first side. The electrode pads are disposed on the substrate. The connecting lines are respectively connected to the electrode pads. A first part of the connecting lines are extended to the first side, a second part of the connecting lines are extended to the second side, and each of the connecting lines is electrically connected to other corresponding connecting line to connect the corresponding electrode pads in series and form a plurality of second electrode lines. The second electrode lines are disposed parallel to one another on the substrate and are respectively extended along a second direction. The first direction and the second direction are intersected with each other.

Several exemplary embodiments accompanied with figures are described in detail below to further describe the invention in details.

### BRIEF DESCRIPTION OF THE DRAWINGS

The accompanying drawings are included to provide a further understanding of the invention, and are incorporated in and constitute a part of this specification. The drawings illustrate exemplary embodiments of the invention and, together with the description, serve to explain the principles of the invention.

FIG. 1 is a schematic view of a touch panel according to an embodiment of the invention.

FIG. 2 is a schematic view of a touch panel according to another embodiment of the invention.

FIG. 3 is a schematic view of a touch panel according to another embodiment of the invention.

FIG. 4 is a schematic view of a touch panel according to another embodiment of the invention.

### DETAILED DESCRIPTION OF DISCLOSED EXEMPLARY EMBODIMENTS

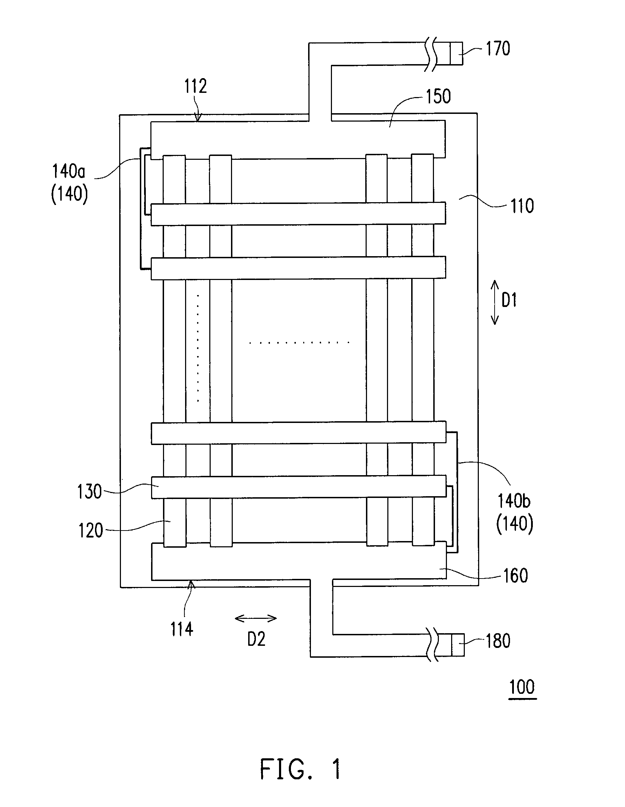

FIG. 1 is a schematic view of a touch panel according to an embodiment of the invention. Referring to FIG. 1, the touch panel 100 of the present embodiment includes a substrate 110, a plurality of first electrode lines 120, a plurality of second electrode lines 130 and a plurality of connecting lines 140. The first electrode lines 120 are disposed parallel to one another on the substrate 110 and are respectively extended along a first direction D1 from a first side 112 of the substrate 110 to a second side 114 of the substrate 110 opposite to the first side 112. The second electrode lines 130 are disposed parallel to one another on the substrate 110, and respectively extended along a second direction D2, wherein the first direction D1 and the second direction D2 are intersected with each other. The connecting lines 140 are located at the periphery of the substrate 110 and respectively connected to the second electrode lines 130, wherein a part of the connecting lines 140a are extended to the first side 112 and another part of the connecting lines 140b are extended to the second side 114. Due to the connecting lines located at the periphery of the substrate, the material of the connecting lines 140 can be any conductive material. In the present embodiment, the material of the connecting lines 140 is, for example, metal or conductive transparent material. Herein, the amount of the first electrode lines 120 and the second electrode lines 130 of the touch panel 100 can be equal or not equal. The amount of the first electrode lines 120 and the second electrode lines 130 are not limited in the present application.

Accordingly, the first electrode lines 120 and the second electrode lines 130 are intersected with each other so as to achieve surface sensing. When a user touches the touch panel 100 with a finger, the first electrode lines 120 and the second electrode lines 130 of the touch panel 100 will be caused variation in capacitance on a position where the finger touches. The touch panel 100 then calculates the coordinates of the touch point according to the variation in capacitance and transmits the coordinates to the electronic device connected thereto.

In the present embodiment, the first electrode lines 120 and the second electrode lines 130 can be disposed on the same plane or on different planes. For instance, the first electrode lines 120 and the second electrode lines 130 are respectively disposed on two opposing surfaces of the substrate 110, or can be disposed on the same surface of the substrate 110. On a manufacturing perspective, the substrate 110 is, for example, taken as a base, and the first electrode lines 120 and the second electrode lines 130 are respectively formed on the same surface or two opposing surfaces of the substrate 110. The material of the substrate 110 is, for example, glass, PET or other transparent material. In an alternative, the first electrode lines 120 and the second electrode lines 130 can be disposed on different substrates. For example, the first electrode lines 120 are formed on the substrate 110 and the second electrode lines 130 are formed on another substrate (not illustrated), and the two substrate are bonded together by, for example, optically clear adhesive (OCA).

In the present embodiment, the touch panel 100 further includes a first flexible printed circuit board 150, a second flexible printed circuit board 160, a first connector 170 and a second connector 180. The first flexible printed circuit board 150 and the second flexible printed circuit board 160 are respectively disposed on the first side 112 and the second side 114 of the substrate 110. Moreover, the first part of the connecting lines 140a as shown in FIG. 1 are connected to the first flexible printed circuit board 150, and the second part of the connecting lines 140b are connected to the second flexible printed circuit board 160. The first connector 170 and the second connector 180 are respectively disposed at the ends of the first flexible printed circuit board 150 and the second flexible printed circuit board 160, such that the first flexible printed circuit board 150 and the second flexible printed circuit board 160 can be respectively connected to a control circuit board (not illustrated) through the first connector 170 and the second connector 180.

As described above, the connecting lines 140 of the present embodiment are respectively connected to the first side 112 of the substrate 110 and the second side 114 of the substrate 110 opposite to the first side, so as to disperse the wiring of the touch panel 100. In addition, in the present embodiment, the first flexible printed circuit board 150 and the second flexible printed circuit board 160 are respectively disposed on the first side 112 and the second side 114 of the substrate 110, so that the connecting lines 140 are respectively connected to the first flexible printed circuit board 150 and the second flexible printed circuit board 160. Compared to the conventional arts which all the connecting lines are connected to the same side of the substrate, the present embodiment uses the wiring space of the substrate more effectively, so as to increase the tolerance in the structural and electronic design, and further reduces the unexpected electronic interference caused by over-crowded wiring on the substrate.

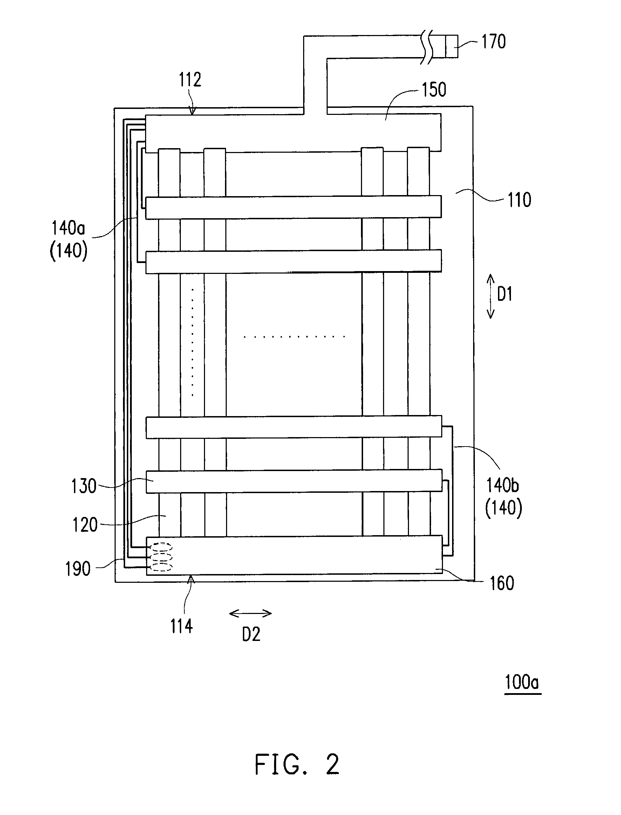

FIG. 2 is a schematic view of a touch panel according to another embodiment of the invention. The structure and the functions of the touch panel 100a in the present embodiment are similar to the touch panel 100 described above. The difference resides in that the first and the second flexible printed circuit board 150, 160 of the touch panel 100 described above are connected to a control circuit board (not illustrated) through the first connector 170 and the second connector 180, while the first flexible printed circuit board 150 and the second flexible printed circuit board 160 of the touch panel 100a in the present embodiment are firstly connected to each other by a conductive line 190 and then connected to a control circuit board (not illustrated) through the same connector 170. In the present embodiment, the touch panel 100a includes the connector 170 and the conductive line 190. The conductive line 190 is located at the periphery of the substrate 110 and is electrically connected to the first flexible printed circuit board 150 and the second flexible printed circuit board 160. The connector 170 is disposed at either the end of the first flexible printed circuit board 150 or the end of the second flexible printed circuit board 160. In other words, the present application chooses to dispose the connector 170 at the end of the first flexible printed circuit board 150 (as shown in FIG. 2) or the second flexible printed circuit board 160, and the first flexible printed circuit board 150 and the second flexible printed circuit board 160 are electrically connected through the conductive line 190 on the substrate 110, such that the first flexible printed circuit board 150 and the second flexible printed circuit board 160 can be connected to the control circuit board (not illustrated) through the same connector 170. Thus, the using amount of the connectors and the flexible printed circuit board can be reduced so as to save the manufacturing cost.

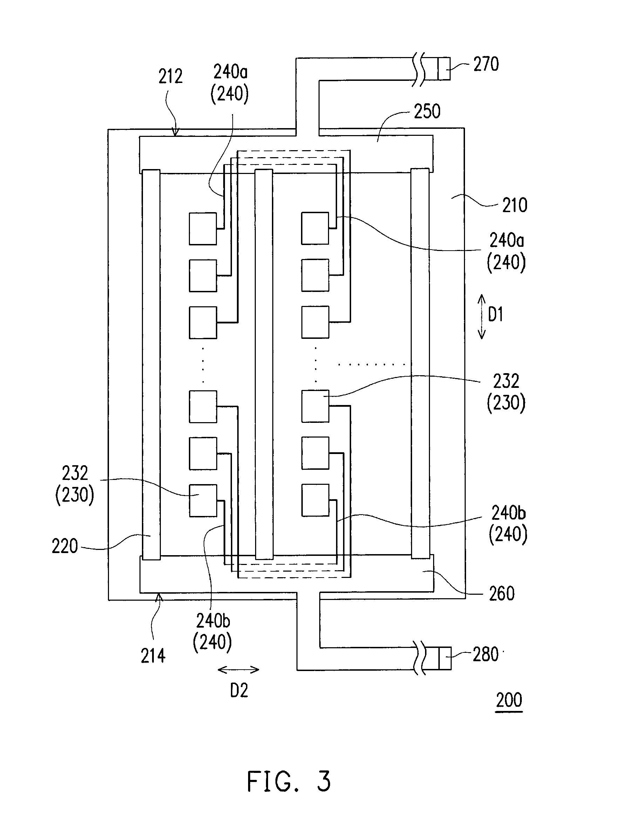

FIG. 3 is a schematic view of a touch panel according to another embodiment of the invention. Referring to FIG. 3, in the present embodiment, the second electrode lines 230 of the touch panel 200 includes a plurality of electrode pads 232. The electrode pads 232 are disposed on the substrate 210. The connecting lines 240 are respectively connected to the electrode pads 232, wherein a first part of the connecting lines 240a are extended to the first side 212 of the substrate 210, a second part of the connecting lines 240b are extended to the second side 214. Each of the connecting lines 240 is electrically connected to other corresponding connecting line 240 respectively along the second direction D2, so as to connect the electrode pads 232 in series and constitute the second electrode lines 230 extended along the second direction D2. Thus, the present embodiment can disperse the wiring of the touch panel 200 to reduce the space which wiring occupies.

Accordingly, the second electrode lines 230 are formed by the connecting lines 240 electrically connecting the corresponding electrode pads 232 on the surface of the substrate 210 on series along the second direction D2. Therefore, in the present embodiment, the material of the connecting lines 240 is conductive transparent material, for example, indium tin oxide (ITO), indium zinc oxide (IZO) or other conductive transparent material. Thus, the problem of non-transparent metal connecting lines shielding the view of users can be avoided. In addition, as it is described in the previous embodiment, the present embodiment can respectively dispose the first flexible printed circuit board 250 and the second flexible printed circuit board 260 on the first side 212 and the second side 214 of the substrate 210, so that the connecting lines 240 are respectively connected to the first flexible printed circuit board 250 and the second flexible printed circuit board 260. In the present embodiment, the touch panel 200 further includes a first connector 270 and a second connector 280 respectively disposed at the ends of the first flexible printed circuit board 250 and the second flexible printed circuit board 260, such that the first flexible printed circuit board 250 and the second flexible printed circuit board 260 can be respectively connected to a control circuit board (not illustrated) respectively through the first connector 270 and the second connector 280.

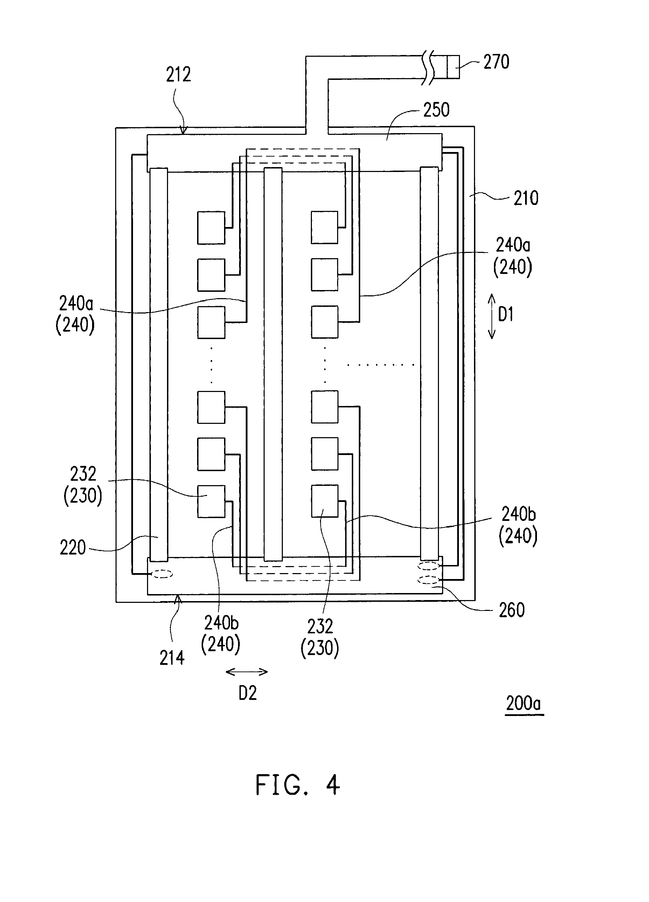

FIG. 4 is a schematic view of a touch panel according to another embodiment of the invention. It should be noted that the reference numbers and partial content in FIG. 3 are continuously used in FIG. 4, in which the same reference numbers represent the same as or similar to the above-mentioned embodiment. The same depictions are omitted and can be understood referring to the above-mentioned embodiment.

Referring to FIG. 4, the structure and the functions of the touch panel 200a in the present embodiment are similar to the touch panel 200 in Fig. 3 described above. The difference resides in that the first and the second flexible printed circuit board 250, 260 of the touch panel 200 described above are connected to a control circuit board (not illustrated) through the first connector 270 and the second connector 280, while the first flexible printed circuit board 250 and the second flexible printed circuit board 260 of the touch panel 200a in the present embodiment are firstly connected to each other through a conductive line 290 and then connected to a control circuit board (not illustrated) through the same connector 270. In the present embodiment, the touch panel 200a includes the connector 270 and the conductive line 290. The conductive line 290 is located at the periphery of the substrate 210 and is electrically connected to the first flexible printed circuit board 250 and the second flexible printed circuit board 260. The connector 270 is disposed at either the end of the first flexible printed circuit board 250 or the end of the second flexible printed circuit board 260. In other words, the connector 270 of the present embodiment is disposed at the end of the first flexible printed circuit board 250 (as shown in FIG. 4) or the end of the second flexible printed circuit board 260, and the first flexible printed circuit board 250 and the second flexible printed circuit board 260 are then electrically connected to each other through the conductive line 290 on the substrate 210, such that the first flexible printed circuit board 250 and the second flexible printed circuit board 260 can be connected to the control circuit board (not illustrated) through the same connector 270. Thus, the using amount of the connectors and the flexible printed circuit board can be reduced so as to save the manufacturing cost.

In summary, the connecting lines of the present application are respectively connected to the first side of the substrate and the second side of the substrate opposite to the first side, so as to disperse the wiring of the touch panel. In addition, in the present application, the first flexible printed circuit board and the second flexible printed circuit board are respectively disposed on the first side and the second side, such that the connecting lines are respectively connected to the first flexible printed circuit board and the second flexible printed circuit board, wherein the first flexible printed circuit board and the second flexible printed circuit board are electrically connected to each other. Compared to the conventional arts which all the connecting lines are connected to the same side of the substrate, the present application uses the wiring space of the substrate more effectively, so as to increase the tolerance in the structural and electronic design, and further reduces the unexpected electronic interference caused by over-crowded wiring on the substrate.

It will be apparent to those skilled in the art that various modifications and variations can be made to the structure of the disclosure without departing from the scope or spirit of the invention. In view of the foregoing, it is intended that the disclosure cover modifications and variations of this invention provided they fall within the scope of the following claims and their equivalents.

## Claims

1. A touch panel, comprising:
a substrate;
a plurality of first electrode lines, disposed parallel to one another on the substrate, and respectively extended along a first direction from a first side of the substrate to a second side of the substrate opposite to the first side;
a plurality of second electrode lines, disposed parallel to one another on the substrate, and respectively extended along a second direction, the first direction and the second direction are intersected with each other;
a plurality of connecting lines, respectively connected to the second electrode lines, wherein a first part of the connecting lines are extended to the first side and a second part of the connecting lines are extended to the second side.

2. The touch panel as claimed in claim 1, further comprising a first flexible printed circuit board and a second flexible printed circuit board, respectively disposed on the first side and the second side of the substrate, the first part of the connecting lines connected to the first flexible printed circuit board, and the second part of the connecting lines connected to the second flexible printed circuit board.

3. The touch panel as claimed in claim 2, further comprising a first connector and a second connector, respectively disposed at the ends of the first flexible printed circuit board and the second printed circuit board.

4. The touch panel as claimed in claim 2, further comprising a connector and a conductive line, the conductive line disposed at the periphery of the substrate and electrically connected to the first flexible printed circuit board and the second printed circuit board, the connector disposed at the end of the first flexible printed circuit board or the second flexible printed circuit board.

5. The touch panel as claimed in claim 1, wherein the material of the connecting lines comprises metal.

6. A touch panel, comprising:
a substrate;
a plurality of first electrode lines, disposed parallel to one another on the substrate, and respectively extended along a first direction from a first side of the substrate to a second side of the substrate opposite to the first side;
a plurality of electrode pads, disposed on the substrate; and
a plurality of connecting lines, respectively connected to the electrode pads, wherein a first part of the connecting lines are extended to the first side, a second part of the connecting lines are extended to the second side, and each of the connecting lines is electrically connected to other corresponding connecting line to connect the corresponding electrode pads in series and form a plurality of second electrode lines, the second electrode lines are disposed parallel to one another on the substrate and extended along a second direction, the first direction is intersected with the second direction.

7. The touch panel as claimed in claim 6, further comprising a first flexible printed circuit board and a second flexible printed circuit board, respectively disposed on the first side and the second side of the substrate, the first part of the connecting lines connected to the first flexible printed circuit board, and the second part of the connecting lines connected to the second flexible printed circuit board.

8. The touch panel as claimed in claim 7, further comprising a first connector and a second connector, respectively disposed at the ends of the first flexible printed circuit board and the second printed circuit board.

9. The touch panel as claimed in claim 7, further comprising a connector and a conductive line, the conductive line disposed at the periphery of the substrate and electrically connected to the first flexible printed circuit board and the second printed circuit board, the connector disposed at the end of the first flexible printed circuit board or the second flexible printed circuit board.

10. The touch panel as claimed in claim 6, wherein the material of the connecting lines comprises conductive transparent material.
